# EUROPEAN PATENT SPECIFICATION

(11) **EP 3 301 820 B1**
(45) Date of publication and mention of the grant of the patent: **24.02.2021**
(21) Application number: 16306280.5
(22) Date of filing: 30.09.2016
(51) Int. Cl.: H04B 3/32

(54) **VECTOR PROCESSOR AND VECTOR PROCESSING METHOD FOR MITIGATING CROSSTALK IN MULTIPLE MODES OF OPERATION**
VEKTORPROZESSOR UND VEKTORVERARBEITUNGSVERFAHREN ZUR VERRINGERUNG DES ÜBERSPRECHENS IN MEHREREN BETRIEBSARTEN
PROCESSEUR VECTORIEL ET PROCÉDÉ DE TRAITEMENT VECTORIEL D'ATTÉNUATION DE LA DIAPHONIE SOUS DES MODES DE FONCTIONNEMENT MULTIPLES

(43) Date of publication of application: 04.04.2018
(73) Proprietor: Alcatel Lucent, 91620 Nozay (FR)
(72) Inventor: TSIAFLAKIS, Paschalis, 2018 Antwerpen (BE); VANDERHAEGEN, Dirk, 2018 Antwerpen (BE)
(74) Representative: Novagraaf Technologies

(56) References cited:
- EP-A1- 2 770 670
- WO-A1-2016/001076
- US-A1- 2009 046 568

## Description

### Field of Invention

The present invention relates to mitigating or cancelling crosstalk in a communication system. Particular embodiments relate to a vector processor, a vector controller, a communication unit of a communication system, a vector processing method, and a computer program product.

### Background

Originally, G.fast (cf. International Telecommunication Union Telecommunication Standardization Sector, ITU-T, specifications G.9700 and G.9701) was considered a technology to be deployed from a distribution point unit (DPU), to provide connectivity to up to 16 customer premises equipments (CPEs). However, recently, several operators have communicated that a DPU-only deployment (Fiber to the Distribution Point, FTTdp) is less attractive for their infrastructure as it comes with a burden in capital expenditure and roll-out time. As a result, there is an emerging demand for considering G.fast systems for cabinet deployment (Fiber to the Cabinet, FTTcab). This requires much larger G.fast systems, connecting 96 or even more CPEs, and requires to optimize G.fast data rates for long loops, (e.g. a loop with a length of 300 m or more). However, data path and control path dimensioning scales quadratically and cubically, respectively, with the number of served lines or ports. This results in a significant increase of the complexity and cost of the vector processor (VP) and vectoring controller entity (VCE).

Consequently, it is necessary to reduce the complexity of the VP and VCE for very large scale G.fast systems.

A state-of-the-art technique to reduce the VP complexity (number of MACs and memory) is the use of partial crosstalk cancellation (PCC). Crosstalk into a line (of a cable binder) typically comes from a few dominant crosstalkers when considering the VDSL2 (Very-high-bit-rate Digital Subscriber Line 2) frequency range. PCC exploits this and restricts cancellation to only a few crosstalkers (using a so-called disturber list), thereby saving on required MACs (Multiply Accumulate units) and memory.

WO 2016/001076 A1 discloses a method for managing transmission resources in a communication system with Sub-Loop Unbundling, the method comprising assigning a common frequency range over which first sets of carriers are configured for communication over respective one subscriber lines, dispatching the subscriber lines between a plurality of autonomous vectoring processors to organize the lines into a plurality of distinct vectoring groups, and assigning a plurality of additional disjoint frequency ranges to respective vectoring groups over which second sets of carriers are configured for enhanced communication over respective lines, wherein the second sets of carriers are configured over the respective disjoint frequency ranges assigned to the respective vectoring groups which the respective subscriber lines belong to.

US 2009/046568 A1 discloses a communication apparatus and method for effective updating of crosstalk reduction parameters when changing the composition of vectored groups in the context of partial vectoring.

### Summary

It is an insight of the inventors that PCC only performs well under small VDSL2 crosstalk levels. However, when simulating PCC (with 50% disturber selection) for a G.fast system (using frequencies up to 106 MHz or even 212 MHz), performance of PCC significantly degrades compared to full vectoring. It can for example be shown that average (full vectoring) data rates of 800 Mbps are reduced to only 100 Mbps for PCC. In addition, PCC does not necessarily reduce the
complexity of the control path. The reason for the significantly degraded performance is that the crosstalk levels are much higher in G.fast, due to the extended frequency range compared to VDSL2. It can be expected that the same problem occurs for other types of interference-impacted communication systems operating over such extensive frequency ranges, for example over 500 MHz or greater frequency ranges.

Embodiments of the present invention aim to provide effective operation for communication systems operating over a relatively broad frequency range, for example a total frequency range of at least 35 MHz. A non-limiting example of such communication systems is G.fast. Such communication systems may use a common frequency range for transmission, for example with a multicarrier technology (i.e. using multiple tones), and may be subject to crosstalk (including not only far-end crosstalk, but also other forms of crosstalk such as near-end crosstalk and echo).

According to a first aspect of the present invention there is provided a vector processor according to claim 1.

In this manner, operation of the vector processor can be different for the first frequency range than for the second frequency range, which allows to effectively utilize computational resources of the vector processor, since operation over a given frequency range can be tailored taking into account the usefulness of vector processing for that given frequency range. In this specification, in the context of frequency ranges, the term "separate" may be understood to mean "non-overlapping".

According to various embodiments of the present invention, the second frequency range is situated above the first frequency range.

Thus, for the first, lower, frequency range (i.e. covering relatively lower frequencies), guarantees of quality (for example, certain minimum data rates) can be made, whereas for the second, higher, frequency range (i.e. covering relatively higher frequencies) where crosstalk effects may be more significant due to the higher frequencies, those specific subscriber lines that need high-frequency crosstalk mitigation can see the quality of their communication improved.

According to various embodiments of the present invention, the vector processor is configured for varying the selected subscriber lines of the second group over time, based on traffic information representing traffic load on at least one subscriber line of the number of subscriber lines, and/or by periodically selecting another subset from a plurality of different pre-defined strict subsets of the first group.

Thus, by varying the selected subscriber lines of the second group, the computational efficiency can be maintained over time. Also, the vector processor can better respond to changing traffic load.

According to various embodiments of the present invention, the vector processor is configured for operating according to a third mode of operation, distinct from the first mode and from the second mode, over a third frequency range, separate from the first frequency range and from the second frequency range. The third mode of operation comprises mitigating crosstalk for a third group of the number of subscriber lines, the third group being selected as a strict subset of the first group and differing from the second group. The third mode of operation further comprises disabling direct communication over the third frequency range for subscriber lines of the number of subscriber lines not forming part of the third group.

Thus, the computational effort of the vector processor can be allocated more effectively, taking into account frequency-dependency for different subscriber lines.

According to various embodiments of the present invention, the vector processor is configured for retrieving a set of pre-stored crosstalk cancellation coefficients in order to mitigate the crosstalk for the second group, derived from channel characteristics of the second group. In a specific embodiment of the vector processor according to the present invention, if a vector controller according to the present invention is present, the vector controller may be configured to calculate and pre-store one or more sets of crosstalk cancellation coefficients, for example in a memory of the vector controller, in a memory of the vector processor, and/or in an external memory. In a particular further developed embodiment, the vector controller may be configured for controlling the vector processor to perform the retrieving of the set or of one of the sets.

Thus, by retrieving the set of pre-stored crosstalk cancellation coefficients, the vector processor can respond quickly to changes in traffic load (for example on an order of milliseconds) by activating the correct set of crosstalk cancellation coefficients.

According to various embodiments of the present invention, the first group comprises a plurality of sub-groups, wherein each sub-group is selected as a strict subset of victim lines of the first group, and each sub-group is associated with a separate frequency sub-range of the first frequency range. According to a preferred further developed embodiment, each victim line of the first group is preferably included in at least one sub-group of the plurality of sub-groups.

Thus, computational resources can be utilized more efficiently, while performing full vectoring on the sub-groups, by focussing on the impact on fewer victim lines. If these are divided over the first frequency range in an equal manner - that is, if each victim line of the first group is included in at least one sub-group of the plurality of sub-groups - the impact on the data rate can be equalized. In a preferred further developed embodiment, each victim line of the first group is included in a number of sub-groups greater than or equal to a predetermined threshold - for example, the predetermined threshold may be the greatest integer lower than the cardinality of a typical sub-group (that is, how many lines are included in a typical sub-group) divided by the difference of the number of subscriber lines in the first group and said cardinality. According to a yet further developed embodiment, one or more victim lines of the first group may be prioritized by including them in a number of sub-groups that is yet greater than the predetermined threshold, while including other victim lines of the first group in a number of sub-groups that is smaller than the predetermined threshold.

According to various embodiments of the present invention, the second mode of operation comprises generating at least one boosting signal corresponding to at least one direct communication signal sent using the second group, taking into account crosstalk from at least one of the subscriber lines for which direct communication is disabled onto the second group. The second mode of operation further comprises transmitting the at least one boosting signal using the at least one of the subscriber lines for which direct communication is disabled, in order to augment the at least one direct communication signal sent using the second group.

Thus, the frequency range parts of the subscriber lines not forming part of the first group, which are not used for direct communication, can be usefully used for augmenting transmission on the active subscriber lines, that is, those of the second group.

According to various embodiments of the present invention, the vector processor is configured for operating according to a fourth mode of operation, distinct from the first mode and from the second mode, over a fourth frequency range, separate from the first frequency range and from the second frequency range. The vector processor is configured for operating according to the fourth mode by mitigating crosstalk for a fourth group of the number of subscriber lines, the fourth group being selected as a strict subset of the first group. The fourth mode of operation further comprises enabling direct communication over the fourth frequency range for at least some, preferably all, subscriber lines of the number of subscriber lines not forming part of the fourth group.

Thus, computational resources can be utilized more efficiently by focussing on the impact from fewer disturber lines.

According to various embodiments of the present invention, the first frequency range is situated below an approximate midpoint of a total frequency range over which the communication system operates, the total frequency range comprising at least the first frequency range and the second frequency range, and the second frequency range is situated above the approximate midpoint of the total frequency range.

Thus, a convenient division can be used between the first frequency range and the second frequency range.

According to various embodiments of the present invention, the vector processor is further configured for operating according to a total-frequency-range mode of operation, distinct from the first mode and from the second mode, over a total frequency range over which the communication system operates, the total frequency range comprising at least the first frequency range and the second frequency range. The vector processor is configured for operating according to the total-frequency-range mode by mitigating crosstalk for a fifth group of the number of subscriber lines. The fifth group comprises strictly fewer of the number of subscriber lines than the first group.

Thus, the same vector processor can also operate to perform full vectoring conventionally, albeit for a reduced number of subscriber lines, namely the fifth group. This allows to apply the same vector processor in a broader array of applications.

According to various embodiments of the present invention, the vector processor is configured for the restricting of the direct communication by setting transmit gain for transmissions using the subscriber lines of the number of subscriber lines not forming part of the second group. In a specific preferred embodiment, the transmit gain is set using a transmitter initiated gain adjustment parameter.

According to another aspect of the present invention, there is provided a vector controller configured to configure a vector processor according to any one of the above described embodiments. In an exemplary embodiment, the vector controller may be a vectoring controller entity coupled to the vector processor. In a particular embodiment, the configuring may comprise calculating at least one set of crosstalk cancellation coefficients for the vector processor, storing the at least one set of crosstalk cancellation coefficients, and controlling the vector processor to retrieve and activate the stored at least one set of crosstalk cancellation coefficients.

According to another aspect of the present invention, there is provided a communication unit of a communication system. The communication unit comprises a vector processor according to any one of the embodiments disclosed above. The communication unit is operatively coupled to at least the first group of the number of subscriber lines of the communication system.

According to another aspect of the present invention, there is provided a vector processing method according to claim 15..

According to yet another aspect of the present invention, there is provided a computer program product comprising a computer-executable program of instructions for performing, when executed on a computer, the steps of the vector processing method according to any one of the method embodiments disclosed above.

It will be understood by the skilled person that the features and advantages disclosed hereinabove with respect to embodiments of the method may also apply, *mutatis mutandis,* to embodiments of the computer program product.

### Brief description of the figures

The accompanying drawings are used to illustrate presently preferred non-limiting exemplary embodiments of devices of the present invention. The above and other advantages of the features and objects of the present invention will become more apparent and the present invention will be better understood from the following detailed description when read in conjunction with the accompanying drawings, in which:
Figure 1 schematically illustrates an embodiment of a vector processor according to the present invention;
Figure 2 schematically illustrates an embodiment of a vector processing method according to the present invention, e.g. as performed by the vector processor embodiment shown in Figure 1;
Figure 3 schematically illustrates operation of a first exemplary embodiment according to the present invention;
Figure 4 schematically illustrates operation of a second exemplary embodiment according to the present invention;
Figure 5 schematically illustrates operation of a third exemplary embodiment according to the present invention;
Figure 6 schematically illustrates operation of a fourth exemplary embodiment according to the present invention;
Figure 7 schematically illustrates operation of a fifth resp. sixth exemplary embodiment according to the present invention; and
Figure 8 schematically illustrates operation of a seventh exemplary embodiment according to the present invention.

### Description of embodiments

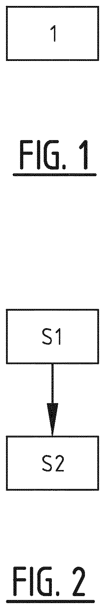

According to a preferred embodiment of the present invention, there is provided a vector processor for mitigating crosstalk between a number of subscriber lines of a communication system. The vector processor is configured for: operating according to a first mode of operation over a first frequency range, wherein the first mode of operation comprises mitigating crosstalk for a first group of subscriber lines selected among the number of subscriber lines; and operating according to a second mode of operation, distinct from the first mode, over a second frequency range, separate from the first frequency range, wherein the second mode of operation comprises mitigating crosstalk for a second group of the number of subscriber lines. The second group is selected as a strict subset of the first group - that is, there exist at least one or more subscriber lines of the first group of the number of subscriber lines that are not included in the second group. The second mode of operation further comprises disabling direct communication over the second frequency range for subscriber lines of the number of subscriber lines not forming part of the second group. Figure 1 schematically illustrates an embodiment of such a vector processor 1.

In this context, mitigating crosstalk for a given group of subscriber lines may refer to mitigating crosstalk on one or more, preferably all, subscriber lines forming part of that given group, and from one or more, preferably all, subscriber lines forming part of that given group, and, in optional further developments, also from one or more subscriber lines not forming part of that given group.

Figure 2 schematically illustrates an embodiment of a vector processing method according to the present invention, e.g. as performed by the vector processor 1 embodiment shown in Figure 1. In operation S1, the method comprises operating according to the first mode of operation over the first frequency range. In operation S2, the method comprises operating according to the second mode of operation over the second frequency range.

Particular embodiments of the present disclosure relate to a vector processor that can be used as a vector processor for performing a different type of vectoring processing for the second group than for the first group, for example by using different crosstalk cancellation coefficients. It is noted that such coefficients are called "crosstalk cancellation coefficients", but that they need not fully cancel all crosstalk - that is, they may simply mitigate (i.e. reduce the effect of) a part of crosstalk to some degree, yet still be called "crosstalk cancellation coefficients".

For the sake of clarity, it is to be understood that the term "crosstalk" as used in the context of this specification may refer not only to far-end crosstalk, but also to near-end crosstalk, and/or echo - for example in a full-duplex transmission communication system.

According to a embodiment, the vector processor is configured as follows, in order to mitigate crosstalk between a number of subscriber lines of a communication system. It is configured to operate according to a first mode of operation over a first frequency range. The first mode of operation comprises mitigating crosstalk for a first group of subscriber lines selected among the number of subscriber lines. It is further configured to operate according to a second mode of operation, distinct from the first mode, over a second frequency range, separate from the first frequency range. The second mode of operation comprises mitigating crosstalk for a second group of the number of subscriber lines. The second group is selected as a strict subset of the first group. The second mode of operation further comprises disabling direct communication over the second frequency range for subscriber lines of the number of subscriber lines not forming part of the second group.

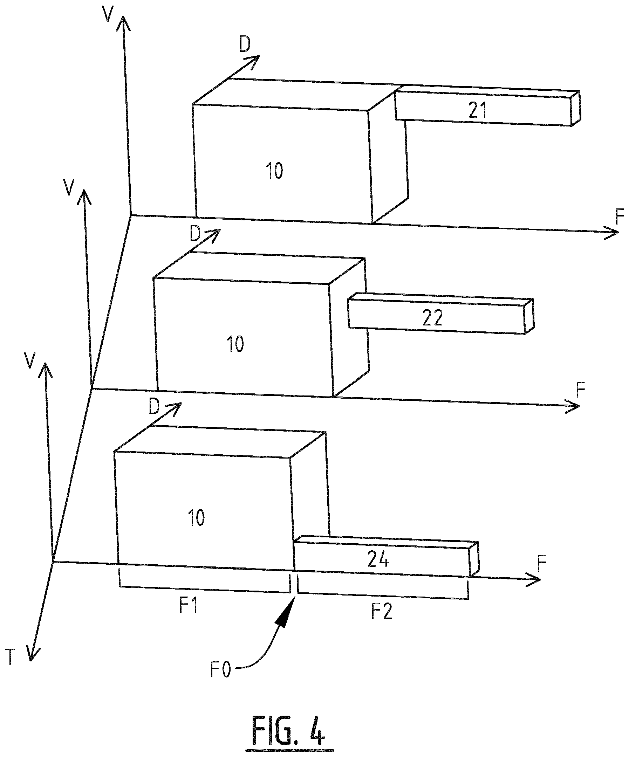

In other words, it may be configured to perform a first type of vectoring over a first frequency range, and a second, more "sparse", type of vectoring over a second frequency range. In this specification, this second type of vectoring may be called "sparse", because it is used for the second group, which is selected as a strict subset of (and therefore comprises fewer of the number of subscriber lines than) the first group, and is thus relatively more "sparse" than "full". In this first exemplary embodiment, the vector processor may perform full vectoring over the first frequency range, for example on the first half of the tones (that is, the specific frequencies on which the communication system operates). In a particular example, there may be 1000 tones starting from the first tone that can be used for transmission. In an exemplary embodiment, the vectoring resources may be left as they are, that is, they may not be adapted based on traffic information whereas in an alternative embodiment, they may be adapted based on traffic information. In another alternative embodiment, they may be adapted based on a predetermined schedule. In this first exemplary embodiment, over the second frequency range, for example on the second half of the tones, only a strict subset of the first group may be considered by the vector processor, that is, their corresponding disturbers are cancelled, for example by applying a number of crosstalk cancellation coefficients. In this first exemplary embodiment, it may be preferable to store all possible subsets, or at least as many possible subsets as is feasible given memory constraints, for example in a local vector processor memory (or in a memory of a vector controller according to the present invention that is coupled to the vector processor, or in an external memory), and the vector processor may be configured to retrieve and (thus indirectly) activate a set of pre-stored crosstalk cancellation coefficients (e.g. based on a control signal from a vector controller according to the present invention that is coupled to the vector processor), i.e. have one of the possible subsets active, preferably based on (a preferably instantaneously determined) traffic load. The set of pre-stored crosstalk cancellation coefficients may be derived from channel characteristics of the second group. Alternatively, as will be explained with reference to Figure 4, the vector controller may be configured for calculating a number of crosstalk cancellation coefficients in order to mitigate the crosstalk for the second group, derived from channel characteristics of the second group, and to control the vector processor to directly activate the calculated number of crosstalk cancellation coefficients.

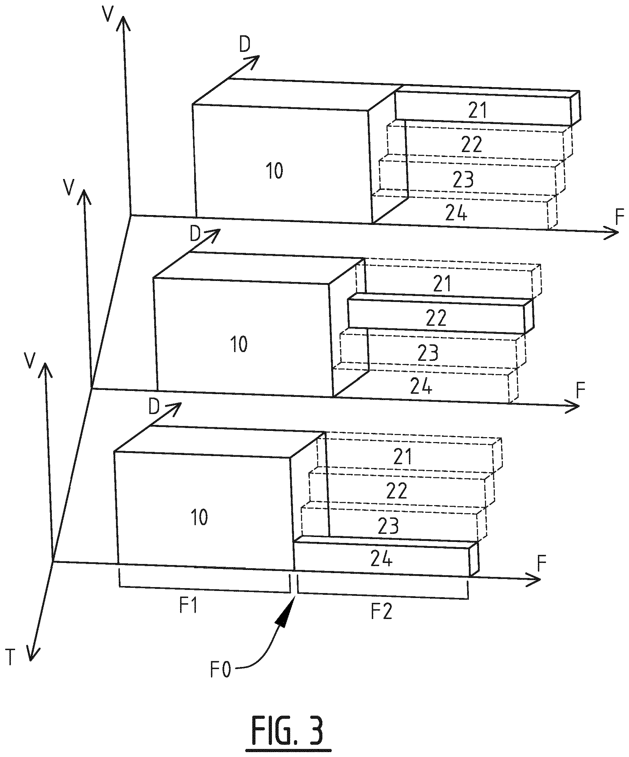

Figure 3 schematically illustrates operation of the first exemplary embodiment according to the present invention. The figure shows several axes, namely a time axis T, indicating passing time from above to below - that is, from top to bottom the figure shows different, subsequent moments in time; a frequency axis F indicating low frequencies on the left and high frequencies on the right; and a subscriber line axis V for the victim lines, combined with a subscriber line axis D for the disturber lines. In the figure, F1 denotes the first frequency range, and F2 denotes the second frequency range. In the figure, F0 denotes a frequency or a range of frequencies separating the first frequency range F1 from the second frequency range F2. In a further developed embodiment, F0 may represent an approximate midpoint of a total frequency range over which the communication system operates, for example approximately 53 MHz for a communication system operating over a total frequency range of 106 MHz, or approximately 106 MHz for a communication system operating over a total frequency range of 212 MHz. It will be understood that the same notations, where used in the other figures, need not be discussed again.

The figure displays a first mode of operation for a first group 10 over the first frequency range F1, and a second mode of operation for a second group 21, 22, 24 over the second frequency range F2. It additionally shows the disturber dimension.

In this example, at any single point in time, there is only one second group 21 (at the first point in time in the figure), 22 (at the second point in time in the figure), 24 (at the third point in time in the figure). The second group is selected as a strict subset of the first group 10, and therefore comprises fewer subscriber lines of the number of subscriber lines than the first group 10. Also, in this example, the selected subscriber lines of the second group 21, 22, 24 may vary over time, for example based on obtained traffic information representing traffic load on at least one subscriber line of the number of subscriber lines, preferably on all subscriber lines of the number of subscriber lines. In an alternative embodiment, the selected subscriber lines of the second group 21, 22, 24 may be varied over time, by periodically selecting another subset from a plurality of different pre-defined strict subsets 21-24 of the first group 10. In this example, the second frequency range F2 is situated above the first frequency range F1.

In this first exemplary embodiment, the vector processor 1 may be configured for retrieving a set of pre-stored crosstalk cancellation coefficients in order to mitigate the crosstalk for the second group, derived from channel characteristics of the second group, for example based on intermittently obtained channel estimation values (or derivates) for those subscriber lines-contrast this to the below disclosed second exemplary embodiment, illustrated with reference to Figure 4, wherein a vector controller according to the present invention may be configured for calculating a number of crosstalk cancellation coefficients in order to mitigate crosstalk for the second group, derived from channel characteristics of the second group, for example based on intermittently obtained channel estimation values (or derivates) for the subscriber lines. This is shown in the respective figures in the sense that "ghost" blocks are shown as striped-line blocks where such sets of pre-stored crosstalk cancellation coefficients may exist, whereas a lack of such "ghost" blocks in the figure may indicate that the second number of crosstalk cancellation coefficients may be calculated - that is, that they are not pre-stored and retrieved, but they are computed on-the-spot, for example by the vector controller.

As stated above, the second mode of operation further comprises disabling direct communication over the second frequency range F2 for subscriber lines 23 of the number of subscriber lines not forming part of the second group 21, 22, 24. That is, at the first point in time in the figure, direct communication may be restricted for subscriber lines 22, 23 and 24, that is, for subscriber lines other than those of the second group 21 at that first point in time; at the second point in time in the figure, direct communication may be restricted for subscriber lines 21, 23 and 24, that is, for subscriber lines other than those of the second group 22 at that second point in time; and at the third point in time in the figure, direct communication may be restricted for subscriber lines 21, 22 and 23, that is, for subscriber lines other than those of the second group 24 at that third point in time.

In this first exemplary embodiment, the second group 21, 22, 24 may for example number only a single victim line of the subscriber lines of the first group 10. Alternatively, the second group may for example number multiple victim lines of the subscriber lines of the first group 10.

In this exemplary embodiment, the first group 10 may comprise all subscriber lines of the number of subscriber lines. In an alternative embodiment, the first group 10 may comprise a strict subset of the number of subscriber lines.

In this exemplary embodiment, the first frequency range F1 may be chosen to be situated below, that is, to be lower (i.e. less) than, an approximate midpoint of a total frequency range over which the communication system operates, and the second frequency range F2 may be chosen to be situated above, that is, to be higher (i.e. greater) than, the approximate midpoint of the total frequency range. The total frequency range may comprise at least the first frequency range F1 and the second frequency range F2.For example, the approximate midpoint of the total frequency range may be approximately 53 MHz or approximately 106 MHz, particularly in the case of a G.fast communication system operating over a total frequency range of 106 MHz or 212 MHz respectively.

In a further developed embodiment, the vector processor may be further configured for operating according to a total-frequency-range mode of operation, distinct from the first mode and from the second mode, over the total frequency range. The vector processor may further be configured for operating according to the total-frequency-range mode by mitigating crosstalk for a fifth group of the number of subscriber lines, wherein the fifth group comprises strictly fewer of the number of subscriber lines than the first group. The total frequency range may comprise at least the first frequency range F1 and the second frequency range F2.For example, the approximate midpoint of the total frequency range may be approximately 53 MHz or approximately 106 MHz, particularly in the case of a G.fast communication system operating over a total frequency range of 106 MHz or 212 MHz respectively.

It will be understood that a number of the above disclosed additional features of the first exemplary embodiment are intended for illustrative purposes only, and should not be construed to limit the present disclosure, whose scope is determined by the appended claims and their equivalents.

In an example embodiment, wherein the vector processor is configured for varying the selected subscriber lines of the second group over time, the choice of which subscriber lines belong to the second group may for example be updated on an order of seconds. In another example embodiment, the vector processor may be configured for retrieving a set of pre-stored crosstalk cancellation coefficients in order to mitigate the crosstalk for the second group, derived from channel characteristics of the second group. The choice of which pre-stored crosstalk cancellation coefficients to retrieve may for example be updated on an order of milliseconds, for example by a vector controller according to the present invention.

Preferred embodiments according to the present invention may provide one or more of the following benefits:
a. For long subscriber lines (for example of the order of 300 m), performance loss (in sustained rates) may be negligible.
b. Potentially, the required number of MACs and amount of memory may be significantly reduced (for example cut in half), if the electronic layout of the vector processor is organized efficiently.
c. Peak performance may preferably be allocated to the subscriber lines that need it most, while simultaneously offering full sustained rates to the long subscriber lines.
d. It may be taken into consideration that the uplink constrains the bandwidth of the communication system. For instance, a 10 Gbps uplink may allow a sustained downstream data rate of 100 Mbps for all subscriber lines. In this case, it may not make sense to design the vector processor to allocate sustained data rates larger than 300 Mbps to all subscriber lines. This insight may be explained with reference to statistical multiplexing, wherein it may statistically be assumed that not all users of a communication system require all of their respectively available resources at the same time, and wherein the communication system may thus be safely under-dimensioned.
e. When considering a communication system wherein for example only half of the subscriber lines are active, the MACs and/or memory resources may be reorganized in order to perform full vectoring on all tones (i.e. over the total frequency range).

According to a second exemplary embodiment, the vector processor may be configured as follows. It may be configured to perform full vectoring on a first frequency range, and sparse vectoring on a second frequency range, as explained above. The second group may also be called a sparse vectoring block.

Figure 4 schematically illustrates operation of the second exemplary embodiment according to the present invention.

As was explained above with reference to Figure 3, a difference with the first exemplary embodiment is that in the second exemplary embodiment, the vector processor may be configured for activating a number of crosstalk cancellation coefficients, calculated by a vector controller according to the present invention, in order to mitigate the crosstalk for the second group, for example based on obtained channel estimation values (and derivates) for at least some of the subscriber lines. In other words, a vector controller according to the present invention may be configured to only calculate coefficients for one second group 21, 22, 24 and to control the vector processor to directly load these into the memory of the vector processor. In other words, the crosstalk cancellation coefficients are recomputed on-the-spot (instead of retrieved from an existing storage) and directly loaded into the vector processor. This may for example be done using swap memory. The lack of sets of pre-stored crosstalk cancellation coefficients is shown in the figure by the lack of "ghost" blocks compared to Figure 3.

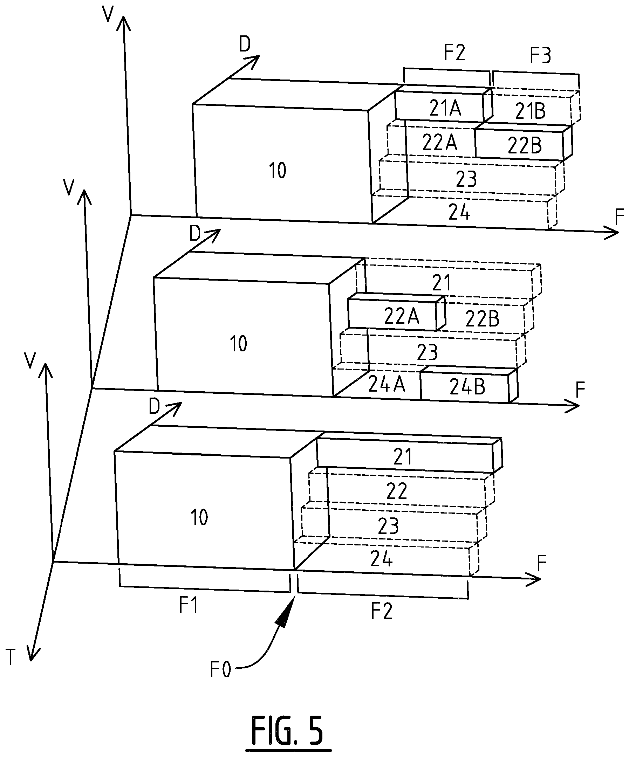

According to a third exemplary embodiment, the vector processor may be configured as follows. It may be configured for operating according to a third mode of operation, distinct from the first mode and the second mode, over a third frequency range, separate from the first frequency range and from the second frequency range. The third mode of operation comprises mitigating crosstalk for a third group of the number of subscriber lines, the third group being selected as a strict subset of the first group and differing from the second group. Moreover, the third mode of operation may further comprise disabling direct communication over the third frequency range for subscriber lines of the number of subscriber lines not forming part of the third group. This is shown in Figure 5 for the first point in time by a second group 21A over a second frequency range F2 (which is in this example smaller than the second frequency range F2 shown with reference to the first and second exemplary embodiment) and a third group 22B over a third frequency range F3, separate from the first frequency range F1 and from the second frequency range F2 (at least for that first point in time), which are different (that is, they comprise different subscriber lines, and they cover different frequency ranges); and for the second point in time by a second group 22A, likewise over the second frequency range F2 as for the first point in time, and a third group 24B, likewise over the third frequency range F3 as for the first point in time. In this example, the second frequency range F2 is situated below the third frequency range F3, but in an alternative embodiment this could also be *vice versa.* Moreover, in this example, the second frequency range F2 is the same for the first and second point in time, and the third frequency range F3 is also the same for the first and second point in time - however, in an alternative embodiment, the specific frequencies included in the second and/or third frequency ranges F2, F3 may differ between the first and second point in time. For the third point in time, there may for example be a second group 21 and no third group, analogously to the first and second exemplary embodiment.

It is noted for this third exemplary embodiment that the second mode of operation may also comprise disabling direct communication over the second frequency range F2 for subscriber lines of the number of subscriber lines not forming part of the second group. In other words, in the first point in time shown in the figure, direct communication may be disabled over the second frequency range F2 for subscriber lines included in blocks 22A, 23 and 24, and in the second point in time shown in the figure, direct communication may be disabled over the second frequency range F2 for subscriber lines included in blocks 21, 23 and 24A. In the third point in time shown in the figure, direct communication may be disabled over the second frequency range F2 for subscriber lines included in blocks 22, 23 and 24, analogously to the first and second exemplary embodiments.

Moreover, direct communication over the third frequency range F3 may be disabled for subscriber lines of the number of subscriber lines not forming part of the third group (e.g. subscriber lines in blocks 21B, 23 and 24 for the first point in time, and subscriber lines in blocks 21, 22B and 23 for the second point in time) - analogously to the disabled direct communication with respect to the second frequency range F2 as explained above. In other words, the vector processor according to the third exemplary embodiment may be configured to perform full vectoring on the first frequency range F1, and sparse vectoring on the second frequency range F2 and on the third frequency range F3. In a particular embodiment, the second frequency range F2 and the third frequency range F3 may together cover the higher-frequency remainder of the total frequency range over which the communication system operates, excepting the first frequency range F1. However, it could also be contemplated to arrange the second frequency range F2 and the third frequency range F3 to cover (a substantial part of, for example at least 85% of) that higher-frequency remainder.

According to a fourth exemplary embodiment, the vector processor may be a combination of the above described second exemplary embodiment and the above described third exemplary embodiment. That is, it may combine the use of a third group with the calculating and direct activation of the number of crosstalk cancellation coefficients (instead of simply retrieving a pre-stored set and activating that set indirectly).

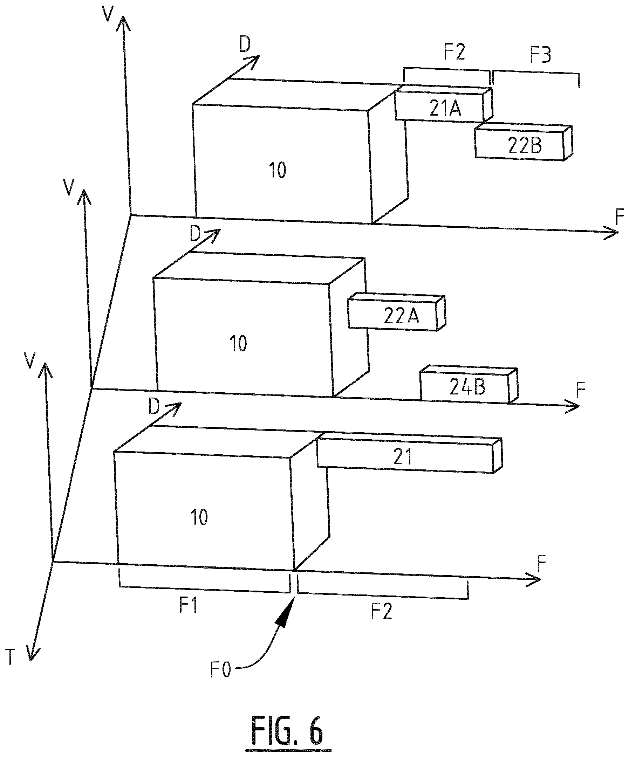

Figure 6 schematically illustrates operation of the fourth exemplary embodiment according to the present invention.

It will be understood that features of the above disclosed embodiments may also optionally be combined with the below disclosed embodiments. In particular, the below disclosed embodiments may include the distinguishing features of the second exemplary embodiment, and/or the distinguishing features of the third exemplary embodiment, and/or the distinguishing features of the fourth exemplary embodiment. Furthermore, they may include the features that were disclosed above in the context of the first exemplary embodiment, whether they are included in the example of Figure 3 or not.

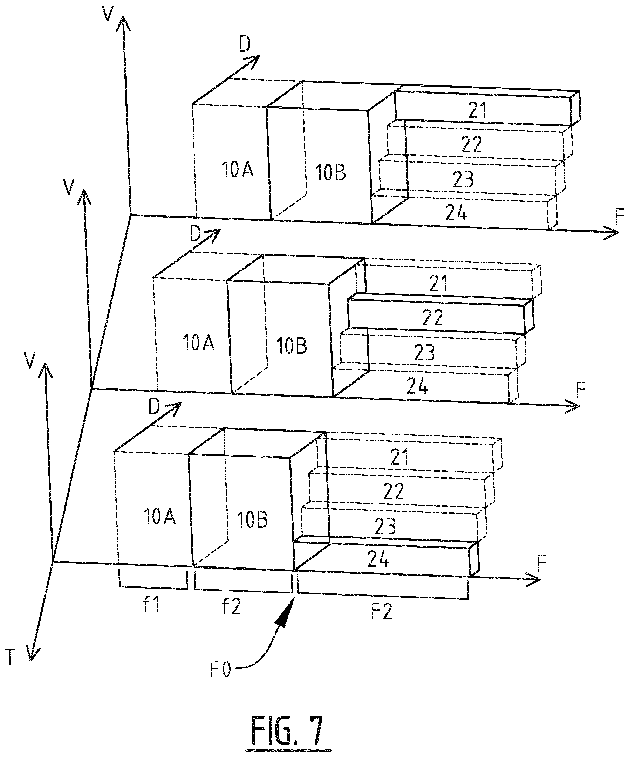

According to a fifth exemplary embodiment, the vector processor may be configured as follows. It may be configured for operating according to the first mode for a second frequency sub-range f2, for example comprised within the first frequency range; and it may be configured for operating according to a different mode of operation, distinct from the first mode, for a first frequency sub-range f1, for example comprised within the first frequency range, the first frequency sub-range f1 being separate from and preferably situated below the second frequency sub-range. It may preferably be configured for operating according to the different mode by withholding crosstalk mitigation for the first group. Figure 7 schematically illustrates operation of the fifth exemplary embodiment according to the present invention. The figure uses f1 to denote the first frequency sub-range and f2 to denote the second frequency sub-range.

In other words, it may preferably withhold vectoring from subscriber lines 10A over a first frequency sub-range f1, for example comprised within the first frequency range F1, and it may be configured perform full vectoring on subscriber lines 10B over a second frequency sub-range f2, for example comprised within the first frequency range F1, and separate from and preferably situated above the first frequency sub-range f1. This fifth exemplary embodiment exploits the insight that non-vectored operation (by withholding crosstalk mitigation) may still result in sufficient data rates at relatively low frequencies.

According to a sixth exemplary embodiment, the vector processor may be configured as follows, in addition to the operation of any one or more of the other above described exemplary embodiments. In this sixth exemplary embodiment, the vector processor may further be configured for operating according to a fourth mode of operation, distinct from the first mode and from the second mode, over a fourth frequency range, separate from the first frequency range and from the second frequency range. The fourth mode may comprise mitigating crosstalk for a fourth group of the number of subscriber lines. The fourth group may be selected as a strict subset of the first group and may differ from the second group. The fourth mode of operation may further comprise enabling direct communication over the fourth frequency range for at least some (preferably all) subscriber lines of the number of subscriber lines not forming part of the fourth group. For this alternative embodiment, Figure 7 may for example be re-interpreted such that for example f1 or f2 may denote the fourth frequency range and such that for example block 10A or 10B may denote the fourth group. Alternatively, Figures 5 and 6 may for example also be re-interpreted such that for example F3 may denote the fourth frequency range and blocks 21A and 22A may denote the fourth group (for two distinct points in time).

In other words, in the fourth frequency range, distinct from the first frequency range and from the second frequency range, a sparse vectoring mode of operation may be used, wherein at least some un-vectored (preferably all) victim lines of the subscriber lines are active (i.e. used for direct communication), but crosstalk from only a limited number of disturber lines of the subscriber lines is cancelled. This may also be referred to as disturber selection.

According to a seventh exemplary embodiment, the vector processor may be configured as follows. The first group may comprise a plurality of sub-groups 11, 12, 13, 14. Each sub-group 11-14 may be selected as a strict subset of victim lines of the first group 10. Each sub-group 11-14 may be associated with a separate frequency sub-range (not shown) of the first frequency range F1. In this manner, complexity may be reduced, by considering only subsets. Each victim line of the first group 10 may preferably be included in at least one sub-group of the plurality of sub-groups 11-14, in order to equalize the impact on the data rate. In a preferred further developed embodiment, each victim line of the first group is included in a number of sub-groups greater than or equal to a predetermined threshold - for example, the predetermined threshold may be the greatest integer lower than the cardinality of a typical sub-group (that is, how many lines are included in a typical sub-group) divided by the difference of the number of subscriber lines in the first group and said cardinality. According to a yet further developed embodiment, one or more victim lines of the first group may be prioritized by including them in a number of sub-groups that is yet greater than the predetermined threshold, while including other victim lines of the first group in a number of sub-groups that is smaller than the predetermined threshold.

In this seventh exemplary embodiment, a particular advantage follows from the insight that the performance depends linearly on the size of the sub-group, whereas memory and MACs depend quadratically (that is, by power 2), and the control path complexity depends cubically (that is, by power 3) thereon. Rounded example values for the performance impact are, for example, 70% performance for 50% memory/MAC saving and for 65% control path complexity saving, or 50% performance for 75% memory/MAC saving and for 87.5% control path complexity saving.

Further, the sub-groups 11, 12, 13, 14 may vary over time, for example based on obtained traffic information representing traffic load for at least the first number of subscriber lines, or according to a predetermined schedule, e.g. by periodically selecting another configuration of sub-groups from a plurality of different pre-defined configurations of sub-groups being strict subsets of the first group.

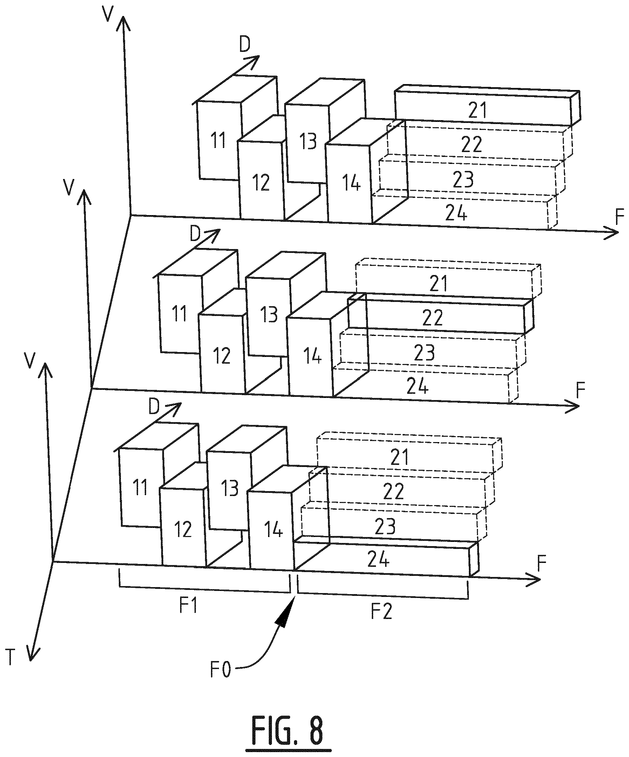

Figure 8 schematically illustrates operation of the seventh exemplary embodiment according to the present invention.

According to an eighth exemplary embodiment, the vector processor may be configured as follows, in addition to the operation of the seventh exemplary embodiment. The size of the sub-groups may be optimized over different frequencies or sub-bands. An example approach for such optimization may comprise the following, assuming a total available budget of crosstalk cancellation coefficients, and assuming no sub-group allocations at the sub-bands. A specific increase in size of the sub-group at the sub-band may be determined to give rise to the largest increase in data rate according to some suitable optimization metric. By iteratively increasing the next best (i.e. "best" according to the used optimization metric) size of the sub-group in the sub-band, the allocation of sub-group sizes over all sub-bands may be optimized (greedily), until the total available budget of crosstalk cancellation coefficients is allocated.

Embodiments of the present invention may therefore allow to reduce the cost of the vector processor engine and an associated vectoring controller entity, in particular in case of very large G.fast communication systems (for example with 96 or more ports). Various embodiments may be considered to be scalable and to follow a pay-as-you-grow principle. This may facilitate gradual upgrades of existing G.fast communication systems to future G.fast communication systems (or other communication systems). Embodiments of the present invention may in particular exploit the insight that the uplink does not need to support peak rate performance of all subscriber lines at the same time, which insight may result in reduced vector processor design constraints, leading to reduced complexity and lower costs. In particular, embodiment of the present invention may be considered to be scalable because they allow full vectoring performance for a 96-port communication system, but allow reduced performance for a communication system with a higher number of ports. This goes hand-in-hand with the above discussed reduced constraints on the uplink.

Preferred embodiments of the present invention may offer a fixed (preferably large) sustained rate as well as dynamic peak rates, in particular by allocating different types of modes of operation over different frequency ranges, preferably in a time dynamic manner. In a particular embodiment, this may be implemented using the NOI/DOI operation (i.e. normal / discontinuous operation interval), combined with dynamic resource allocation, as discussed in the G.fast standard. However this particular embodiment's implementation may be more expensive in terms of the required vectoring resources (MACs, memory), and there may be an impact on sustained data rates when peaking certain subscriber lines.

Preferred embodiments of the present invention as described above may be advantageously applied in a context of G.fast communication systems, yet are not to be construed as limited only to G.fast communication systems.

It will be understood that the above disclosed embodiments of a vector processor according to the present invention may be included in a transceiver unit apparatus of a communication system operating over a total frequency range of at least 35 MHz. In that case, they may be operatively coupled to at least the first group of the number of subscriber lines of the communication system.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the present invention. It will thus be appreciated that those skilled in the art will be able to devise various arrangements that, although not explicitly described or shown herein, embody the principles of the present invention and are included within its scope. Furthermore, all examples recited herein are principally intended expressly to be only for pedagogical purposes to aid the reader in understanding the principles of the present invention and the concepts contributed by the inventor(s) to furthering the art, and are to be construed as being without limitation to such specifically recited examples and conditions.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the present invention. Similarly, it will be appreciated that any flowcharts, flow diagrams, state transition diagrams, pseudo code, and the like represent various processes which may be substantially represented in computer readable medium and so executed by a computer.

It should be noted that the above-mentioned embodiments illustrate rather than limit the present invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the present invention, expressions such as "comprise", "include", "have", "may comprise", "may include", or "may have" indicate existence of corresponding features but do not exclude existence of additional features.

Whilst the principles of the present invention have been set out above in connection with specific embodiments, it is to be understood that this description is merely made by way of example and not as a limitation of the scope of protection which is determined by the appended claims.

## Claims

1. A vector processor (1) coupled to a number of subscriber lines of a communication system; wherein the vector processor is configured to:
- operate (S1) according to a first mode of operation over a first frequency range (F1), wherein the first mode of operation comprises mitigating crosstalk for a first group (10) of victim subscriber lines selected among the number of subscriber lines; and
- operate (S2) according to a second mode of operation, distinct from the first mode of operation, over a second frequency range (F2), separate from the first frequency range, wherein the second mode of operation comprises mitigating crosstalk for a second group (21, 22, 24) of victim subscriber lines, the second group being selected as a strict subset of the first group, and wherein the second mode of operation further comprises disabling direct communication over the second frequency range for subscriber lines of the number of subscriber lines not forming part of the second group.

2. The vector processor of claim 1, wherein the second frequency range is situated above the first frequency range.

3. The vector processor of claim 1 or 2, wherein the vector processor is configured to vary the selected victim subscriber lines of the second group over time, based on traffic information representing traffic load on at least one subscriber line of the number of subscriber lines, and/or to periodically select another subset from a plurality of different pre-defined strict subsets of the first group.

4. The vector processor according to any one of the previous claims, wherein the vector processor is configured to operate according to a third mode of operation, distinct from the first mode of operation and from the second mode of operation, over a third frequency range (F3), separate from the first frequency range and from the second frequency range, wherein the third mode of operation comprises mitigating crosstalk for a third group of victim subscriber lines, the third group being selected as a strict subset of the first group and differing from the second group, and wherein the third mode of operation further comprises disabling direct communication over the third frequency range for subscriber lines of the number of subscriber lines not forming part of the third group.

5. The vector processor according to any one of the previous claims,
wherein the vector processor is configured to retrieve a set of pre-stored crosstalk cancellation coefficients in order to mitigate the crosstalk for the second group, derived from channel characteristics of the second group.

6. The vector processor according to any one of the claims 1-5,
wherein the first group of victim subscriber lines comprises a plurality of sub-groups (11, 12, 13, 14), wherein each sub-group is selected as a strict subset of victim lines of the first group and wherein each sub-group is associated with a separate frequency sub-range of the first frequency range; and
wherein each victim line of the first group is preferably included in at least one sub-group of the plurality of sub-groups.

7. The vector processor according to any one of the previous claims, wherein the second mode of operation comprises:
- generating at least one boosting signal corresponding to at least one direct communication signal sent using the second group, taking into account crosstalk from at least one of the subscriber lines for which direct communication is disabled onto the second group; and
- transmitting the at least one boosting signal using the at least one of the subscriber lines for which direct communication is disabled, in order to augment the at least one direct communication signal sent using the second group.

8. The vector processor according to any one of the previous claims,
wherein the vector processor is configured to operate according to a fourth mode of operation, distinct from the first mode of operation and from the second mode of operation, over a fourth frequency range, separate from the first frequency range and from the second frequency range, wherein the fourth mode comprises mitigating crosstalk for a fourth group of victim subscriber lines, the fourth group being selected as a strict subset of the first group, and wherein the fourth mode of operation further comprises enabling direct communication over the fourth frequency range for at least some subscriber lines of the number of subscriber lines not forming part of the fourth group.

9. The vector processor according to any one of the previous claims,
wherein the first frequency range is situated below an approximate midpoint (F0) of a total frequency range over which the communication system operates, the total frequency range comprising at least the first frequency range and the second frequency range, and wherein the second frequency range is situated above the approximate midpoint of the total frequency range.

10. The vector processor according to any one of the previous claims, wherein the vector processor is further configured to operate according to a total-frequency-range mode of operation, distinct from the first mode of operation and from the second mode of operation, over a total frequency range over which the communication system operates, the total frequency range comprising at least the first frequency range and the second frequency range; wherein the vector processor is configured to operate according to the total-frequency-range mode by mitigating crosstalk for a fifth group of the number of subscriber lines over the total frequency range, wherein the fifth group comprises strictly fewer of the number of subscriber lines than the first group.

11. The vector processor according to any one of the previous claims, wherein the vector processor is configured to disable the direct communication by setting transmit gain for transmissions using the subscriber lines of the number of subscriber lines not forming part of the second group.

12. The vector processor according to any one of the previous claims, wherein the second group comprises a single victim line or multiple victim lines.

13. A vector controller configured to configure a vector processor (1) according to any one of the claims 1 to 12.

14. A communication unit of a communication system, the communication unit comprising a vector processor (1) according to any one of the claims 1to 12, and being operatively coupled to at least the first group of the number of victim subscriber lines of the communication system.

15. A vector processing method for a vector processor coupled to a number of subscriber lines of a communication system; wherein the vector processing method comprises:
- operating (S1), by the vector processor, according to a first mode of operation over a first frequency range (F1), wherein the first mode of operation comprises mitigating crosstalk for a first group (10) of victim subscriber lines selected amongst the number of subscriber lines; and
- operating (S2), by the vector processor, according to a second mode of operation, distinct from the first mode of operation, over a second frequency range (F2), separate from the first frequency range, wherein the second mode of operation comprises mitigating crosstalk for a second group (21, 22, 24) of victim subscriber lines, the second group being selected as a strict subset of the first group, and wherein the second mode of operation further comprises disabling direct communication over the second frequency range for subscriber lines of the number of subscriber lines not forming part of the second group.

16. A computer program product comprising a computer-executable program of instructions for performing, when executed on a computer, the steps of the vector processing method of claim 15.

## Patentansprüche

1. Vektorprozessor (1), der an eine Anzahl von Teilnehmerleitungen eines Kommunikationssystems gekoppelt ist, wobei der Vektorprozessor zu Folgendem ausgelegt ist:
- Betrieben werden (S1) gemäß einem ersten Betriebsmodus über einen ersten Frequenzbereich (F1), wobei der erste Betriebsmodus das Mindern eines Übersprechens für eine erste Gruppe (10) von Opferteilnehmerleitungen, die aus der Anzahl von Teilnehmerleitungen ausgewählt sind, umfasst; und
- Betrieben werden (S2) gemäß einem zweiten Betriebsmodus, der sich vom ersten Betriebsmodus unterscheidet, über einen zweiten Frequenzbereich (F2), der vom ersten Frequenzbereich getrennt ist, wobei der zweite Betriebsmodus das Mindern des Übersprechens für eine zweite Gruppe (21, 22, 24) von Opferteilnehmerleitungen umfasst, wobei die zweite Gruppe als ein strikter Untersatz der ersten Gruppe ausgewählt ist und wobei der zweite Betriebsmodus ferner für Teilnehmerleitungen der Anzahl von Teilnehmerleitungen, die keinen Teil der zweiten Gruppe bilden, das Deaktivieren der direkten Kommunikation über den zweiten Frequenzbereich umfasst.

2. Vektorprozessor nach Anspruch 1, wobei der zweite Frequenzbereich über dem ersten Frequenzbereich liegt.

3. Vektorprozessor nach Anspruch 1 oder 2, wobei der Vektorprozessor dazu ausgelegt ist, auf Basis von Verkehrsinformationen, die eine Verkehrslast auf mindestens einer Teilnehmerleitung der Anzahl von Teilnehmerleitungen repräsentieren, die ausgewählten Opferteilnehmerleitungen der zweiten Gruppe über die Zeit zu variieren und/oder aus einer Vielzahl von verschiedenen vordefinierten strikten Untersätzen der ersten Gruppe regelmäßig einen anderen Untersatz auszuwählen.

4. Vektorprozessor nach einem der vorhergehenden Ansprüche, wobei der Vektorprozessor dazu ausgelegt ist, gemäß einem dritten Betriebsmodus, der sich vom ersten Betriebsmodus und vom zweiten Betriebsmodus unterscheidet, über einen dritten Frequenzbereich (F3), der vom ersten Frequenzbereich und vom zweiten Frequenzbereich getrennt ist, betrieben zu werden, wobei der dritte Betriebsmodus das Mindern des Übersprechens für eine dritte Gruppe von Opferteilnehmerleitungen umfasst, wobei die dritte Gruppe als ein strikter Untersatz der ersten Gruppe ausgewählt ist und sich von der zweiten Gruppe unterscheidet und wobei der dritte Betriebsmodus ferner für Teilnehmerleitungen der Anzahl von Teilnehmerleitungen, die keinen Teil der dritten Gruppe bilden, das Deaktivieren der direkten Kommunikation über den dritten Frequenzbereich umfasst.

5. Vektorprozessor nach einem der vorhergehenden Ansprüche,
wobei der Vektorprozessor dazu ausgelegt ist, einen Satz von vorab gespeicherten Übersprechunterdrückungskoeffizienten abzurufen, abgeleitet von Kanaleigenschaften der zweiten Gruppe, um das Übersprechen für die zweite Gruppe zu mindern.

6. Vektorprozessor nach einem der Ansprüche 1-5,
wobei die erste Gruppe von Opferteilnehmerleitungen eine Vielzahl von Untergruppen (11, 12, 13, 14) umfasst, wobei jede Untergruppe als ein strikter Untersatz von Opferleitungen der ersten Gruppe ausgewählt ist und wobei jede Untergruppe mit einem separaten Frequenzunterbereich des ersten Frequenzbereichs verknüpft ist; und
wobei jede Opferleitung der ersten Gruppe vorzugsweise in mindestens einer Untergruppe der Vielzahl von Untergruppen beinhaltet ist.

7. Vektorprozessor nach einem der vorhergehenden Ansprüche, wobei der zweite Betriebsmodus Folgendes umfasst:
- Erzeugen von mindestens einem Verstärkungssignal, das mindestens einem direkten Kommunikationssignal entspricht, das unter Verwendung der zweiten Gruppe gesendet wird, wobei ein Übersprechen von mindestens einer der Teilnehmerleitungen, für die die direkte Kommunikation deaktiviert ist, auf die zweite Gruppe berücksichtigt wird; und
- Übertragen des mindestens einen Verstärkungssignals unter Verwendung der mindestens einen der Teilnehmerleitungen, für die die direkte Kommunikation deaktiviert ist, um das mindestens eine direkte Kommunikationssignal, das unter Verwendung der zweiten Gruppe gesendet wird, zu erweitern.

8. Vektorprozessor nach einem der vorhergehenden Ansprüche,
wobei der Vektorprozessor dazu ausgelegt ist, gemäß einem vierten Betriebsmodus, der sich vom ersten Betriebsmodus und vom zweiten Betriebsmodus unterscheidet, über einen vierten Frequenzbereich, der vom ersten Frequenzbereich und vom zweiten Frequenzbereich getrennt ist, betrieben zu werden, wobei der vierte Modus das Mindern des Übersprechens für eine vierte Gruppe von Opferteilnehmerleitungen umfasst, wobei die vierte Gruppe als ein strikter Untersatz der ersten Gruppe ausgewählt ist und wobei der vierte Betriebsmodus ferner für mindestens einige Teilnehmerleitungen der Anzahl von Teilnehmerleitungen, die keinen Teil der vierten Gruppe bilden, das Aktivieren der direkten Kommunikation über den vierten Frequenzbereich umfasst.

9. Vektorprozessor nach einem der vorhergehenden Ansprüche,
wobei der erste Frequenzbereich unter einem ungefähren Mittelpunkt (F0) eines gesamten Frequenzbereichs, über den das Kommunikationssystem betrieben wird, liegt, wobei der gesamte Frequenzbereich den ersten Frequenzbereich und den zweiten Frequenzbereich umfasst und wobei der zweite Frequenzbereich über dem ungefähren Mittelpunkt des gesamten Frequenzbereichs liegt.

10. Vektorprozessor nach einem der vorhergehenden Ansprüche, wobei der Vektorprozessor ferner dazu ausgelegt ist, gemäß einem Gesamtfrequenzbereichsbetriebsmodus, der sich vom ersten Betriebsmodus und vom zweiten Betriebsmodus unterscheidet, über einen gesamten Frequenzbereich, über den das Kommunikationssystem betrieben wird, betrieben zu werden, wobei der gesamte Frequenzbereich mindestens den ersten Frequenzbereich und den zweiten Frequenzbereich umfasst; wobei der Vektorprozessor dazu ausgelegt ist, durch Mindern des Übersprechens für eine fünfte Gruppe der Anzahl von Teilnehmerleitungen über den gesamten Frequenzbereich gemäß dem Gesamtfrequenzbereichsmodus betrieben zu werden, wobei die fünfte Gruppe strikt weniger der Anzahl von Teilnehmerleitungen als die erste Gruppe umfasst.

11. Vektorprozessor nach einem der vorhergehenden Ansprüche, wobei der Vektorprozessor dazu ausgelegt ist, durch Einstellen einer Übertragungsverstärkung für Übertragungen unter Verwendung der Teilnehmerleitungen der Anzahl von Teilnehmerleitungen, die einen Teil der zweiten Gruppe bilden, die direkte Kommunikation zu deaktivieren.

12. Vektorprozessor nach einem der vorhergehenden Ansprüche, wobei die zweite Gruppe eine einzelne Opferleitung oder mehrere Opferleitungen umfasst.

13. Vektorsteuerung, die dazu ausgelegt ist, einen Vektorprozessor (1) nach einem der Ansprüche 1 bis 12 auszulegen.

14. Kommunikationseinheit eines Kommunikationssystems, wobei die Kommunikationseinheit einen Vektorprozessor (1) nach einem der Ansprüche 1 bis 12 umfasst und an mindestens die erste Gruppe der Anzahl von Opferteilnehmerleitungen des Kommunikationssystems wirkgekoppelt ist.

15. Vektorverarbeitungsverfahren für einen Vektorprozessor, der an eine Anzahl von Teilnehmerleitungen des Kommunikationssystems gekoppelt ist, wobei das Vektorverarbeitungsverfahren Folgendes umfasst:
- Betrieben werden (S1) durch den Vektorprozessor gemäß einem ersten Betriebsmodus über einen ersten Frequenzbereich (F1), wobei der erste Betriebsmodus das Mindern eines Übersprechens für eine erste Gruppe (10) von Opferteilnehmerleitungen, die aus der Anzahl von Teilnehmerleitungen ausgewählt sind, umfasst; und
- Betrieben werden (S2) durch den Vektorprozessor gemäß einem zweiten Betriebsmodus, der sich vom ersten Betriebsmodus unterscheidet, über einen zweiten Frequenzbereich (F2), der vom ersten Frequenzbereich getrennt ist, wobei der zweite Betriebsmodus das Mindern des Übersprechens für eine zweite Gruppe (21, 22, 24) von Opferteilnehmerleitungen umfasst, wobei die zweite Gruppe als ein strikter Untersatz der ersten Gruppe ausgewählt ist und wobei der zweite Betriebsmodus ferner für Teilnehmerleitungen der Anzahl von Teilnehmerleitungen, die keinen Teil der zweiten Gruppe bilden, das Deaktivieren der direkten Kommunikation über den zweiten Frequenzbereich umfasst.

16. Computerprogrammprodukt, das ein computerausführbares Programm mit Anweisungen zum Durchführen der Schritte des Vektorverarbeitungsverfahrens von Anspruch 15, wenn es auf einem Computer ausgeführt wird, umfasst.

## Revendications

1. Processeur vectoriel (1) couplé à de nombreuses lignes d'abonnés d'un système de communication ; dans lequel le processeur vectoriel est configuré pour :
- fonctionner (S1) selon un premier mode de fonctionnement sur une première plage de fréquences (F1), dans lequel le premier mode de fonctionnement comprend l'atténuation de la diaphonie pour un premier groupe (10) de lignes d'abonnés victimes sélectionnées parmi les nombreuses lignes d'abonnés ; et
- fonctionner (S2) selon un deuxième mode de fonctionnement, distinct du premier mode de fonctionnement, sur une deuxième plage de fréquences (F2), séparée de la première plage de fréquences, dans lequel le deuxième mode de fonctionnement comprend l'atténuation de la diaphonie pour un deuxième groupe (21, 22, 24) de lignes d'abonnés victimes, le deuxième groupe étant sélectionné comme un sous-ensemble strict du premier groupe, et dans lequel le deuxième mode de fonctionnement comprend en outre la désactivation d'une communication directe sur la deuxième plage de fréquences pour les lignes d'abonnés des nombreuses lignes d'abonnés ne faisant pas partie du deuxième groupe.

2. Processeur vectoriel selon la revendication 1, dans lequel la deuxième plage de fréquences est située au-dessus de la première plage de fréquences.

3. Processeur vectoriel selon la revendication 1 ou 2, dans lequel le processeur vectoriel est configuré pour faire varier les lignes d'abonnés victimes sélectionnées du deuxième groupe au cours du temps, sur la base d'informations de trafic représentant une charge de trafic sur au moins une ligne d'abonné des nombreuses lignes d'abonnés, et/ou pour sélectionner périodiquement un autre sous-ensemble parmi une pluralité de différents sous-ensembles stricts prédéfinis du premier groupe.

4. Processeur vectoriel selon l'une quelconque des revendications précédentes, dans lequel le processeur vectoriel est configuré pour fonctionner selon un troisième mode de fonctionnement, distinct du premier mode de fonctionnement et du deuxième mode de fonctionnement, sur une troisième plage de fréquences (F3), séparée de la première plage de fréquences et de la deuxième plage de fréquences, dans lequel le troisième mode de fonctionnement comprend l'atténuation de la diaphonie pour un troisième groupe de lignes d'abonnés victimes, le troisième groupe étant sélectionné comme un sous-ensemble strict du premier groupe et différant du deuxième groupe, et dans lequel le troisième mode de fonctionnement comprend en outre la désactivation d'une communication directe sur la troisième plage de fréquences pour les lignes d'abonnés des nombreuses lignes d'abonnés ne faisant pas partie du troisième groupe.

5. Processeur vectoriel selon l'une quelconque des revendications précédentes,
dans lequel le processeur vectoriel est configuré pour récupérer un ensemble de coefficients d'annulation de diaphonie pré-stockés afin d'atténuer la diaphonie pour le deuxième groupe, dérivés à partir de caractéristiques de canal du deuxième groupe.

6. Processeur vectoriel selon l'une quelconque des revendications 1 à 5,
dans lequel le premier groupe de lignes d'abonnés victimes comprend une pluralité de sous-groupes (11, 12, 13, 14), dans lequel chaque sous-groupe est sélectionné comme un sous-ensemble strict de lignes victimes du premier groupe et dans lequel chaque sous-groupe est associé à une sous-plage de fréquences séparée de la première plage de fréquences ; et
dans lequel chaque ligne victime du premier groupe est de préférence incluse dans au moins un sous-groupe de la pluralité de sous-groupes.

7. Processeur vectoriel selon l'une quelconque des revendications précédentes, dans lequel le deuxième mode de fonctionnement comprend :
- la génération d'au moins un signal d'intensification correspondant à au moins un signal de communication directe envoyé à l'aide du deuxième groupe, prenant en compte la diaphonie provenant d'au moins l'une des lignes d'abonnés pour laquelle une communication directe est désactivée sur le deuxième groupe ; et
- l'émission de l'au moins un signal d'intensification à l'aide de l'au moins une des lignes d'abonnés pour laquelle une communication directe est désactivée, afin de renforcer l'au moins un signal de communication directe envoyé à l'aide du deuxième groupe.

8. Processeur vectoriel selon l'une quelconque des revendications précédentes,
dans lequel le processeur vectoriel est configuré pour fonctionner selon un quatrième mode de fonctionnement, distinct du premier mode de fonctionnement et du deuxième mode de fonctionnement, sur une quatrième plage de fréquences, séparée de la première plage de fréquences et de la deuxième plage de fréquences, dans lequel le quatrième mode comprend l'atténuation de la diaphonie pour un quatrième groupe de lignes d'abonnés victimes, le quatrième groupe étant sélectionné comme un sous-ensemble strict du premier groupe, et dans lequel le quatrième mode de fonctionnement comprend en outre l'activation d'une communication directe sur la quatrième plage de fréquences pour au moins certaines lignes d'abonnés des nombreuses lignes d'abonnés ne faisant pas partie du quatrième groupe.

9. Processeur vectoriel selon l'une quelconque des revendications précédentes,
dans lequel la première plage de fréquences est située au-dessous d'un point médian approximatif (F0) d'une plage de fréquences totale sur laquelle le système de communication fonctionne, la plage de fréquences totale comprenant au moins la première plage de fréquences et la deuxième plage de fréquences, et dans lequel la deuxième plage de fréquences est située au-dessus du point médian approximatif de la plage de fréquences totale.

10. Processeur vectoriel selon l'une quelconque des revendications précédentes, dans lequel le processeur vectoriel est en outre configuré pour fonctionner selon un mode de fonctionnement à plage de fréquences totale, distinct du premier mode de fonctionnement et du deuxième mode de fonctionnement, sur une plage de fréquences totale sur laquelle le système de communication fonctionne, la plage de fréquences totale comprenant au moins la première plage de fréquences et la deuxième plage de fréquences ; dans lequel le processeur vectoriel est configuré pour fonctionner selon le mode à plage de fréquences totale par l'atténuation de la diaphonie pour un cinquième groupe des nombreuses lignes d'abonnés sur la plage de fréquences totale, dans lequel le cinquième groupe comprend strictement moins des nombreuses lignes d'abonnés que le premier groupe.

11. Processeur vectoriel selon l'une quelconque des revendications précédentes, dans lequel le processeur vectoriel est configuré pour désactiver la communication directe par le réglage d'un gain d'émission pour des émissions à l'aide des lignes d'abonnés des nombreuses lignes d'abonnés ne faisant pas partie du deuxième groupe.

12. Processeur vectoriel selon l'une quelconque des revendications précédentes, dans lequel le deuxième groupe comprend une unique ligne victime ou de multiples lignes victimes.

13. Contrôleur vectoriel configuré pour configurer un processeur vectoriel (1) selon l'une quelconque des revendications 1 à 12.

14. Unité de communication d'un système de communication, l'unité de communication comprenant un processeur vectoriel (1) selon l'une quelconque des revendications 1 à 12, et étant couplée de manière fonctionnelle au moins au premier groupe des nombreuses lignes d'abonnés victimes du système de communication.

15. Procédé de traitement vectoriel pour un processeur vectoriel couplé à de nombreuses lignes d'abonnés d'un système de communication ; dans lequel le procédé de traitement vectoriel comprend :
- le fonctionnement (S1), par le processeur vectoriel, selon un premier mode de fonctionnement sur une première plage de fréquences (F1), dans lequel le premier mode de fonctionnement comprend l'atténuation de la diaphonie pour un premier groupe (10) de lignes d'abonnés victimes sélectionnées parmi les nombreuses lignes d'abonnés ; et
- le fonctionnement (S2), par le processeur vectoriel, selon un deuxième mode de fonctionnement, distinct du premier mode de fonctionnement, sur une deuxième plage de fréquences (F2), séparée de la première plage de fréquences, dans lequel le deuxième mode de fonctionnement comprend l'atténuation de la diaphonie pour un deuxième groupe (21, 22, 24) de lignes d'abonnés victimes, le deuxième groupe étant sélectionné comme un sous-ensemble strict du premier groupe, et dans lequel le deuxième mode de fonctionnement comprend en outre la désactivation d'une communication directe sur la deuxième plage de fréquences pour les lignes d'abonnés des nombreuses lignes d'abonnés ne faisant pas partie du deuxième groupe.

16. Produit programme d'ordinateur comprenant un programme exécutable par ordinateur d'instructions pour réaliser, lorsqu'il est exécuté sur un ordinateur, les étapes du procédé de traitement vectoriel selon la revendication 15.
